# EUROPÄISCHE PATENTSCHRIFT

(11) **EP 1 272 310 B1**
(45) Veröffentlichungstag und Bekanntmachung des Hinweises auf die Patenterteilung: **07.05.2008**
(21) Anmeldenummer: 01917086.9
(22) Anmeldetag: 13.03.2001
(51) Int. Cl.: B23P 15/14, B21D 53/28, B21H 5/00, B21H 7/18, F16D 23/02, F16H 55/17, B21K 1/30

(54) **VERZAHNUNG FÜR EINE SYNCHRONISIEREINHEIT**
TOOTHING FOR A SYNCHRONISING UNIT
DENTURE POUR UNITE DE SYNCHRONISATION

(30) Priorität: 12.04.2000 DE 10018093
(43) Veröffentlichungstag der Anmeldung: 08.01.2003
(73) Patentinhaber: Schaeffler KG, 91074 Herzogenaurach (DE)
(72) Erfinder: BUER, Gerald, 96172 Mühlhausen (DE); RÖCKELEIN, Ernst, 96138 Burgebrach (DE); SOYKA, Wilfried, 91074 Herzogenaurach (DE); MAY, Kristina, 92237 Sulzbach-Rosenberg (DE)
(86) Internationale Anmeldenummer: PCT/EP2001/002767
(87) Internationale Veröffentlichungsnummer: WO 2001/078940

(56) Entgegenhaltungen:
- WO-A-87/06314
- DE-A- 2 537 495
- DE-A- 2 549 230
- DE-A- 19 650 343
- DE-A- 19 757 186

## Beschreibung

### Gebiet der Erfindung

Die Erfindung betrifft eine Verzahnung für eine Synchronisiereinheit, die ein durch Umformen aus einem Blech geformtes einteilig ausgebildetes Keilprofil aufweist.

### Hintergrund der Erfindung

Die Erfindung bezieht sich speziell auf das Anwendungsgebiet Synchronisiereinheiten und hierbei wiederum auf Synchronkörper und Schiebemuffen für Kfz-Getriebe. Die Synchronkörper weisen in der Regel eine in Längsrichtung einer Getriebewelle ausgerichtete äußere Verzahnung oder ein ähnlich gestaltetes Keilprofil auf. In diese äußere Verzahnung der Synchronkörper greift eine innere Verzahnung bzw. ein Keilprofil der Schiebemuffe ein. Die Schiebemuffe ist dabei konzentrisch zum Synchronkörper und auf diesem längsverschiebbar angeordnet. Die Schiebemuffen und die Synchronkörper sind auf Grund ihrer Verzahnung auf dem üblichen spanabhebenden Wege nur sehr zeit- und kostenintensiv herzustellen. Deshalb wurde in der jüngsten Vergangenheit nach alternativen Fertigungsmethoden, insbesondere für die Verzahnung oder ähnlich ausgebildeter Keilprofile, gesucht. Dabei wurde auch auf Erfahrungen aus der Umformtechnik zurückgegriffen.

In einem Umformprozeß ohne wesentliche Zerspanarbeit gefertige Verzahnungen für die Herstellung von Kraftfahrzeugteilen gewinnen zunehmend an Bedeutung. Sie zeichnen sich durch viele Vorteile im Vergleich zu ihren durch spanabhebende Verfahren bearbeiteten Vorgängern aus. Diese Vorteile liegen z. B. in dem geringen Gewicht der geformten Teile, der Einsparung von Material bei ihrer Fertigung und in kürze Zeiten für ihre Herstellung.

Die Gestalt und das Profil einer durch Umformen hergestellten Verzahnung ist häufig nicht nur durch die funktionellen Anforderungen, die an eine Verzahnung gestellt werden, geprägt. Das verwendete Umformverfahren hat häufig auch einen Einfluss auf die geometrische Gestalt der Verzahnung. Die verwendeten Verfahren setzen der Anwendung einer Verzahnung bestimmte Grenzen. So ist in DE 197 57 186 ein Keilprofil beschrieben, bei dem die Keile die Verzahnung bilden. Das Verzahnungsprofil steht einseitig aus der Oberfläche eines Blechbandes hervor. Der Querschnitt der Zähne ist voll mit Material ausgefüllt und ragt über den Zahnfuß einteilig mit dem Blechstreifen verbunden aus dem Blechstreifen hervor. Der Blechstreifen ist zumindest an einigen Stellen im Vergleich zu seinem Ausgangsvolumen um das Materialvolumen verringert, das zur Bildung der Zähne verdrängt wurde.

Das vorweg beschriebene Profil wird beispielsweise durch Prägen oder Rollieren in das Blechband eingebracht. Dabei wird der Werkstoff, der die Zähne der Verzahnung bildet, aus dem Blechstreifen verdrängt und fließt in entsprechende, die negative Form des Zahnes aufweisende, Lücken eines Werkzeuges. Je größere der einzelne Zahn einer solchen Verzahnung gestaltet ist, umso mehr Material muss für seine Verformung verdrängt werden. Mit zunehmender Abmessung des Zahnes steigen die für sein Formen notwendigen Verformungskräfte. Außerdem wird für das Fließen des Materiales mehr Zeit benötigt. Zu große und zu schnell verformte Materialmengen verursachen während des Formungsprozeßes unerwünschte Schwingungen. Die Grenzen für die Herstellung einer derartig gestalteten Verzahnung ergeben sich häufig aus diesen Gründen. Die hohen Belastungen erfordern teuere Werkzeuge und die Umformgeschwindigkeiten werden so langsam, dass eine Fertigung unrentabel wird. Aus diesen Gründen weisen die in DE 197 57 186 beschriebenen Verzahnungen zumeist einen relativ kleinen Zahnquerschnitt auf. Der Vorteil einer solchen Verzahnung liegt auf Grund ihrer massiven Ausführung und durch ihren Umformprozeß verfestigten Oberfläche der Zähne in ihrer recht hohen Belastbarkeit aus anwendungstechnischer Sicht.

Es gibt Verzahnungen, bei denen der gesamte Zahnquerschnitt theoretisch beliebig groß gestaltet werden kann. Das sind die Verzahnungen, die in ein relativ dünnwandiges Blech eingeformt werden und dabei ein wellenartig ausgebildetes Keilprofil bilden. Ein derartiges Keilprofil ist in DE-AS 25 37 495 beschrieben. Das Wellenprofil kann durch Durchstellen des Bleches gebildet sein. Dabei ist das Blech pro zu erzeugenden Keil ausgehend von einer gedachten neutralen Linie in eine Richtung, in diesem Fall nach außen, durchgestellt, um einen Zahn zu bilden. Die neutrale Linie verläuft dabei in etwa durch den Zahnfuß von einem Zahn zum anderen. Das einzelne Profil eines jeden Zahnes der Verzahnung ist dadurch im Querschnitt gesehen durch ein einseitig offenes Hohlprofil gebildet, also nicht vollständig mit Material ausgefüllt. Dabei weist die Innenseite des Hohlprofiles in der Regel die um die Blechdicke reduzierte Negativform der Zahnkontur auf. Das den Zahnkopf und die Zahnflanke begrenzende Blech begrenzt im weiteren Verlauf den Zahnfuß, dann den Grund der zwischen zwei Zähnen angeordneten und durch die Flanken der Zähne begrenzten Nut, dann die Flanke des nächsten Zahnes usw..

*Eine ähnliche Verzahnung ist in* DE 25 49 230 *offenbart, in der ein Verfahren zur Herstellung eines rohrartigen Werkstücks vorgestellt wird, das auf einem Dorn gehoben und von außen mit Walzen bearbeitet wird.*

Kennzeichnend für vorgenannte Profile ist, dass die Stärke der Wandung des Hohlprofiles dünner als die Blechdicke des Ausgangsmateriales ist, da die Verzahnung an einem aus einer Ronde gezogenen Topf ausgebildet ist und das Ausgangsmaterial während des Ziehprozesses entsprechend abgestreckt wurde. Kennzeichnend für diese Profile ist weiterhin vor allem, dass die Wandung des Profiles der gesamten Wellenform in allen Querschnitten die gleiche oder annähernd gleiche Wandstärke aufweist. Vorstellbar sind auch Verzahnungen dieser Gattung, bei denen die Wandstärke des Zahnprofiles in etwa der Blechdicke des Ausgangsmateriales entspricht. Hier ist das Material in der Regel nur durchgestellt und musste bei der Formung des Profiles wenig fließen oder abgestreckt werden. Diese Verzahnungs- bzw. Keilprofile sind z. B. durch Rollieren eines Blechstreifens eingebracht.

Die Herstellung von Verzahnungen vorgenannter Gattung ist vor allen Dingen durch relativ geringe Verformungskräfte bei deren Verformung gekennzeichnet, da relativ wenig Material im Umformprozeß verdrängt bzw. gestreckt wird. Der Umformprozeß für das Formen einer solchen Verzahnung lässt nahezu jede Zahngröße zu. Ein weiterer Vorteil dieser Verzahnung liegt in ihrem geringen Gewicht. Dieser Verzahnung sind aber durch die relativ dünne Wandung des Zahnes anwendungstechnische Grenzen gesetzt. Dünnwandiges Material ist z. B. hinsichtlich seines Verformungs- und Elastizitätsverhaltens sowie einer geringeren Widerstandsfähigkeit gegen Kontaktpressung unter Last relativ gering belastbar.

### Zusammenfassung der Erfindung

Aufgabe der Erfindung ist es daher, eine durch spanlose Formgebung gefertigte Verzahnung zu schaffen, die sich nahezu unbeeinflusst von der Abmessung der Zähne wirtschaftlich fertigen lässt, hohen Belastungen stand hält und trotzdem mit geringem Gewicht ausgeführt ist.

Diese Aufgabe ist nach dem Gegenstand des Anspruches 1 mit einer Verzahnung für eine Synchronisiereinheit,
- die ein durch Umformen aus einem Blech geformtes einteilig ausgebildets Keilprofil aufweist,
- bei der an dem Keilprofil, ausgehend von einer gedachten neutralen Linie, in eine Richtung durch Zahnlücken getrennte aneinander benachbarte Zähne und in die entgegengesetzte Richtung durch Keilnuten getrennte benachbarte Keile weisen
- und bei der an den Zähnen zahnfußseitig jeweils eine der Keilnuten ausgebidet ist,
wobei der Querschnitt zumindest jedes der Zähne mit Material des Bleches ausgefüllt ist und jeder der Zähne eine Zahnhöhe aufweist, die zumindest der Dicke des Bleches vor dem Formen des Keilprofiles entspricht. Es sind an einer Seite des Profiles und der neutralen Linie nebeneinander die Zähne, durch ihre Zahnlücken getrennt, angeordnet, während auf der anderen Seite des Profiles durch Keilnuten getrennte Keilnuten hervorragen. Die neutrale Linie verläuft in etwa im Bereich des Zahnfußes von Zahn zu Zahn. Die Zähne und die Keile sind so versetzt zueinander angeordnet, dass zahnfußseitig auf der anderen Seite des Profils die Keilnut ausgebildet ist und keilfußseitig eine Zahnlücke zwei benachbarte Zähne voneinander trennt. Das Profil der Zähne ist im Querschnitt gesehen vollständig mit Material des Bleches ausgefüllt. Die Zähne sind also massiv ausgeführt und weisen keine Hohlprofilform auf. Da die Verzahnung sehr massiv ausgeführt ist, ist sie äußerst belastbar. Sie wird aus Blechmaterial durch Durchstellen, Prägen oder Walzen geformt. Während des Umformprozeßes wird das Material im Bereich des Zahnes nicht abgeschwächt. An die ausgeformten Zähne können wahlweise Dachverzahnungen, Hinterschnitte oder sonstige beliebige Konturen während des Formungsprozeßes oder nachträglich eingebracht werden. Die Umformkräfte sind nicht so hoch, da der Formprozeß zumeist eine Kombination aus Durchstellen und Materialverdrängung darstellt. Das Gewicht eines derartig gestalteten Verzahnungsprofils ist relativ gering, da im Wurzelbereich der Zähne und Keile wenig Material angesammelt ist.

Eine bevorzugte Ausführungsform der Erfindung sieht vor, dass der Querschnitt zumindest jenes Zahnes und jedes Keiles mit dem Material des Bleches ausgefüllt ist und jeder der Zähne eine Zahnhöhe sowie jeder der Keile eine Keilhöhe aufweist, die zumindest der Dicke des Bleches vor dem Formen des Keilprofiles entspricht. Die Zahnhöhe kann damit aber auch dicker sein als die Dicke des Ausgangsmateriales. Für Sonderanwendungen sind also die Keile genauso massiv ausgeführt wie die Zähne der Verzahnung.

Mit weiteren Ausgestaltungen der Erfindung ist vorgesehen, dass die Verzahnung eine Verzahnung einer Schiebemuffe oder eines Synchronkörpers ist. Dabei ist die Verzahnung in ihrem Ausgangszustand an einem Blechstreifen ausgebildet. Der Blechstreifen wird nach der Profilierung mit dem Keilprofil gebogen. Dabei wird er entweder bogenförmig gebogen, so dass sich Zahnsegmente bilden oder kreisförmig gebogen und an seinen Enden zusammengeführt. Die Neutrallinie beschreibt dabei eine Bogen- bzw. Kreisform. Ein kreisförmig gebogener und an seinen Enden zusammengeführter Blechstreifen bildet einen Zahnring, bei dem für eine Schiebemuffe die Zähne der Verzahnung zumindest radial nach innen gerichtet sind und für einen Synchronkörper die Zähne der Verzahnung zumindest radial nach außen weisen. Die zusammengeführten Enden des Blechstreifens, welcher den Zahnring bildet, sind aneinander befestigt, wobei Verschweißen vorzuziehen ist.

### Kurze Beschreibung der Zeichnung

Die Erfindung wird nachfolgend anhand von zwei Ausführungsbeispielen näher erläutert. Es zeigen:
- Figur 1: ein Ausführungsbeispiel einer erfindungsgemäßen Verzahnung, bei der der Querschnitt eines jeden Zahnes mit Material des Bleches ausgefüllt ist und
- Figur 2: ein weiteres Ausführungsbeispiel einer erfindungsgemäßen Verzahnung, bei der die Keile in beide Richtungen Zähne bilden.

### Detaillierte Beschreibung der Zeichnungen

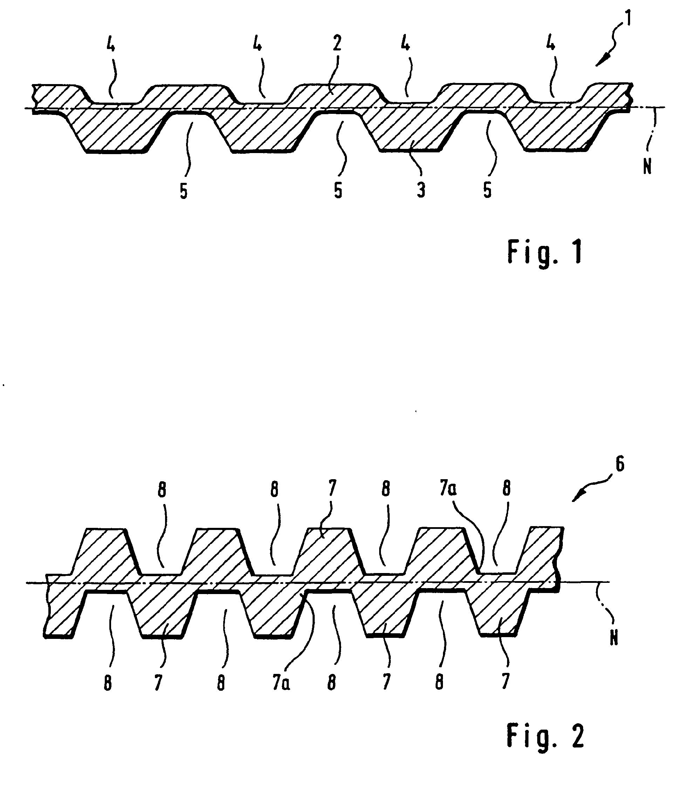

Figur 1 zeigt ein Ausführungsbeispiel einer erfindungsgemäßen Verzahnung an einem Keilprofil 1. Das Keilprofil weist Keile 2 und Zähne 3 auf und ist in einem Blechstreifen geformt, der in gestreckter Form dargestellt ist. Die Keile 2 sind an diesem Blechstreifen ausgehend von einer neutralen Linie N nach oben gerichtet. Die Keile 2 sind in Längsrichtung durch Keilnuten 4 voneinander getrennt. Die Zähne 3 weisen ausgehend von der Neutrallinie N nach unten und sind in Längsrichtung durch Zahnlücken 5 voneinander getrennt. Jede Zahnlücke 5 ist unterhalb eines Keiles 2 ausgebildet und jede Keilnut 4 ist im Bild oberhalb, also zahnfußseitig, eines Zahnes 3 an dem Keilprofil 1 ausgeformt. Die Zähne 3 und auch die Keile 2 sind vollständig mit Material des Bleches ausgefüllt.

In Figur 2 ist ein weiteres Ausführungsbeispiel einer Verzahnung an einem Keilprofil 6 dargestellt. Das Keilprofil 6 weist an seiner Oberseite und an seiner Unterseite Keile auf, die als Zähne 7 ausgebildet sind. Die Zähne 7 sind in Längsrichtung des Keilprofiles 6 gesehen, wechselseitig angeordnet, durch Zahnlücken 8 voneinander getrennt und mit dem Material des Bleches vollständig ausgefüllt. Die Zähne 7 sind massiv ausgeführt, während der Zahnfußbereich 7a wenig Material aufweist. Dem einzelnen Zahn 7 ist zahnfußseitig jeweils eine der Zahnlücken 8 zugeordnet. Es weist jeder der Zähne 7 und jeder der als Zahn 7 ausgebildeten Keile auf der Gegenseite der neutralen Linie N eine Höhe auf, die zumindest der Dicke des Bleches vor dem Formen entspricht.

### Bezugszeichen

- 1: Keilprofil
- 2: Keil
- 3: Zahn
- 4: Keilnut
- 5: Zahnlücke
- 6: Keilprofil
- 7: Zahn
- 7a: Zahnfuß
- 8: Zahnlücke

## Patentansprüche

1. Verzahnung einer Synchronisiereinheit mit einer,
- die ein durch Umformen aus einem Blech geformtes einteilig ausgebildetes Keilprofil (1, 6) aufweist,
- bei der an dem Keilprofil (1, 6), ausgehend von einer gedachten neutralen Linie, in eine Richtung durch Zahnlücken (5, 8) getrennte einander benachbarte Zähne (3, 7) und in die entgegengesetzte Richtung durch Keilnuten (4) getrennte benachbarte Keile (2) weisen
- und bei der an den Zähnen (3, 7) zahnfußseitig jeweils eine der Keilnuten (4) ausgebildet ist,
wobei die Verzahnung in ihrem Ausgangszustand an einem Blechstreifen ausgebildet ist und der Querschnitt zumindest jedes der Zähne (3, 7) vollständig mit Material des Bleches ausgefüllt ist und wobei jeder der Zähne (3, 7) eine Zahnhöhe aufweist, die zumindest der Dicke des Bleches vor dem Formen des Keilprofiles (1, 6) entspricht.

2. Verzahnung nach Anspruch 1, bei der jeder der Keile (2) eine Keilhöhe aufweist, die zumindest der Dicke des Bleches vor dem Formen des Keilprofils (1, 6) entspricht.

3. Verzahnung nach Anspruch 1, bei der die Zähn (3, 7), radial nach innen weisen und die Verzahnung an einer Schiebemuffe vorgesehen ist.

4. Verzahnung nach Anspruch 1, bei der die Zähne (3, 7) radial nach außen weisenden, und die Verzahnung an einem Synchronkörper vorgesehen ist.

## Claims

1. Gearing of a synchronising unit
- comprising a wedge profile (1, 6) formed in one piece by shaping out of a sheet metal,
- which wedge profile (1,6) comprises, starting from an imaginary neutral line, adjoining teeth (3, 7) separated by tooth gaps (5, 8) and pointing in one direction and wedges (2) separated by keyways (4) and pointing in the opposite direction,
- and in which, on the tooth base-side of each tooth (3, 7), a keyway (4) is formed,
wherein, in its initial state, the gearing is configured on a sheet metal strip and the cross-section of at least each of the teeth (3, 7) is entirely filled with material of the sheet metal and each of the teeth (3, 7) has a tooth height that corresponds at least to the thickness of the sheet metal prior to the shaping of the wedge profile (1, 6).

2. Gearing according to claim 1, wherein each of the wedges (2) has a wedge height that corresponds at least to the thickness of the sheet metal prior to the shaping of the wedge profile (1, 6).

3. Gearing according to claim 1, wherein the teeth (3, 7) point radially inwards and the gearing is provided on a sliding sleeve.

4. Gearing according to claim 1, wherein the teeth (3, 7) point radially outwards and the gearing is provided on a synchroniser body.

## Revendications

1. Denture d'un ensemble de synchronisation
- comprenant un profil (1, 6) en clavette formé en une seule pièce par formage à partir d'une tôle,
- ledit profil (1, 6) en clavette comprenant, en partant d'une ligne neutre imaginaire, des dents adjacentes (3, 7) qui sont séparées, l'une de l'autre, par des entredents (5, 8) en étant orientées en une direction, ledit profil (1, 6) en clavette comprenant, en plus, des clavettes (2) séparées, l'une de l'autre, par des rainures (4) à clavette en étant orientées en la direction opposée,
- dans laquelle denture est formée du côté pied de dent de chaque dent (3, 7), une rainure (4) à clavette,
ladite denture, à son état de départ, étant configurée sur un feuillard en tôle, la section droite, au moins, de chacune des dents (3, 7) étant entièrement remplie de matériau de la tôle et chacune des dents (3, 7) ayant une hauteur de dent qui correspond, au moins, à l'épaisseur de la tôle avant le formage du profil (1, 6) en clavette.

2. Denture selon la revendication 1, dans laquelle denture, chacune des clavettes (2) a une hauteur de clavette qui correspond, au moins, à l'épaisseur de la tôle avant le formage du profil (1, 6) en clavette.

3. Denture selon la revendication 1, dans laquelle denture, les dents (3, 7) sont orientées radialement vers l'intérieur en étant prévues sur un manchon coulissant.

4. Denture selon la revendication 1, dans laquelle denture, les dents (3, 7) sont orientées radialement vers l'extérieur en étant prévues sur un corps de synchronisation.
